# EUROPÄISCHE PATENTSCHRIFT

(11) **EP 3 904 180 B1**
(45) Veröffentlichungstag und Bekanntmachung des Hinweises auf die Patenterteilung: **27.09.2023**
(21) Anmeldenummer: 21169380.9
(22) Anmeldetag: 20.04.2021
(51) Int. Cl.: B62B 3/00, B62D 53/00

(54) **TRANSPORTWAGEN ZUM TRANSPORTIEREN UND LAGERN VON GÜTERN**
TRANSPORT TROLLEY FOR TRANSPORTING AND STORING GOODS
CHARIOT DE TRANSPORT PERMETTANT DE TRANSPORTER ET DE STOCKER DES MARCHANDISES

(30) Priorität: 29.04.2020 DE 102020111607
(43) Veröffentlichungstag der Anmeldung: 03.11.2021
(73) Patentinhaber: Linde Material Handling GmbH, 63743 Aschaffenburg (DE)
(72) Erfinder: Deboy, Thomas, 63762 Großostheim (DE); Kessler, Jens, 63867 Johannesberg (DE); Bozem, Stefan, 63776 Mömbris (DE)
(74) Vertreter: Patentship Patentanwaltgesellschaft

(56) Entgegenhaltungen:
- WO-A1-2015/083398
- DE-A1-102011 017 346
- US-A1- 2019 308 651

## Beschreibung

Die Erfindung betrifft ein Transportwagen zum Transportieren und Lagern von Gütern, der einen rechteckförmigen Tragrahmen aufweist, an dessen Unterseite an den vier Eckbereichen jeweils eine Laufrolle angeordnet ist, mit denen sich der Transportwagen auf einer Fahrbahn abstützt, wobei an dem Tragrahmen sich nach vertikal unten erstreckende Stützelemente angeordnet sind, an denen die Laufrollen befestigt sind, wobei die Stützelemente an den Eckbereichen des Tragrahmens angeordnet sind und die Stützelemente jeweils mindestens einen im Eckbereich des Tragrahmens von zumindest einer Außenkante des Tragrahmens nach innen beabstandet angeordneten und nach vertikal unten verlaufenden Stützträger aufweisen.

Für den innerbetrieblichen Transport von Gütern, beispielsweise im Produktionsbereich von Produktionsbetrieben, kommen zunehmend Transportwagen, die auch als Trolleys bezeichnet werden, zum Einsatz, mit denen die entsprechenden Güter transportiert werden.

Aus der EP 2 431 253 B1 ist ein gattungsgemäßer Transportwagen bekannt, der eine Tragplatte als rechteckförmigen Tragrahmen aufweist, wobei direkt an der Unterseite der Tragplatte an den vier Eckbereichen jeweils eine Laufrolle angeordnet ist, mit denen sich der Transportwagen auf einer Fahrbahn abstützt. Mit den Laufrollen kann der Transportwagen über kürzerer Strecken geschoben bzw. gezogen werden, beispielsweise per Hand von einer Person.

Um die Transportwagen über längere Strecken zu transportieren, ist es bekannt, die Transportwagen mit Gabelzinken eines Flurförderzeugs zu unterfahren und anzuheben und/oder die Transportwagen in Routenzuganhängern eines Routenzugs aufzunehmen und zu transportieren. Hierzu sind Routenzuganhänger bekannt, die anhebbare und absenkbare und somit höhenverstellbare Tragleisten aufweisen, die den Tragrahmen an gegenüberliegenden Seiten anheben.

Bei bekannten Transportwagen, bei denen - wie in der EP 2 431 253 B1 - die Laufrollen direkt an der Unterseite der Tragplatte angeordnet sind, ist jedoch nachteilig, dass die Laufrollen durch die Gabelzinken bei der Aufnahme des Transportwagens mit einem Flurförderzeug, beispielsweise einem Gabelstapler, beschädigt werden können und eine Aufnahme durch die Tragleisten eines Routenzuganhängers nur möglich ist, wenn die Laufrollen am Tragrahmen weiter nach innen gesetzt werden. Dies führt jedoch zu einer verringerten Standsicherheit des Transportwagens. Zudem weisen Transportwagen, bei denen - wie in der EP 2 431 253 B1 - die Laufrollen direkt an der Unterseite der Tragplatte angeordnet sind, nur eine geringe Bodenfreiheit auf, so dass der Tragrahmen nicht von einem den Transportwagen unterfahrenden und anhebenden Transportfahrzeug, beispielsweise einem autonomen fahrerlosen Transportfahrzeug, unterfahren werden kann. Derartige einen Transportwagen unterfahrende und anhebende Transportfahrzeug werden auch als Turtle-Fahrzeuge bezeichnet.

Aus der WO 2015/083398 A1 ist ein gattungsgemäßer Transportwagen mit den Merkmalen des Oberbegriffs des Patentanspruchs 1 bekannt.

Die US 2019/308651 A1 offenbart eine Zug- und Mitfahrkarrenanordnung zum Transportieren von Materialien.

Aus der DE 10 2011 017 346 A1 ist ein Anhänger für einen Palettenwagen in einem Routenzug bekannt.

Der vorliegenden Erfindung liegt die Aufgabe zugrunde, einen Transportwagen der eingangs genannten Gattung zur Verfügung zu stellen, der die genannten Nachteile vermeidet.

Diese Aufgabe wird erfindungsgemäß durch einen Trailerzuganhänger mit den Merkmalen des Patentanspruchs 1 gelöst.

Bei dem erfindungsgemäßen Transportwagen sind in den Eckbereichen des Tragrahmens nach unten, zur Fahrbahn gerichtete Stützelemente angeordnet, an denen die Laufrollen angeordnet sind. Die Stützelemente weisen jeweils mindestens einen nach vertikal unten, zur Fahrbahn gerichteten Stützträger auf, der im Eckbereich des Tragrahmens von zumindest einer Außenkante des Tragrahmen nach innen beabstandet angeordnet ist. An den Stützelementen können die Stützrollen möglichst weit außenliegend an den Eckbereichen des Transportwagens angeordnet werden und zur Erhöhung der Standsicherheit des Transportwagens möglichst weit nach außen gerückt werden. Seitlich außerhalb der nach innen versetzten Stützträger werden weiterhin Freiräume erzielt, in die die Tragleisten eines Routenzuganhängers hineinragen können, so dass der Transportwagen mit den Tragleisten des Routenzuganhängers angehoben werden kann. Zudem wird mit den Stützelementen eine erhöhte Bodenfreiheit des Tragrahmens erzielt, die es ermöglicht, dass der Tragrahmen des Transportwagens von einem den Transportwagen unterfahrenden und anhebenden Transportfahrzeug, beispielsweise einem autonomen fahrerlosen Transportfahrzeug, unterfahren werden kann. Die Stützelemente führen weiterhin dazu, dass die Gefahr der Beschädigung der Stützrollen bei der Aufnahme des Transportwagens mit den Gabelzinken eines Flurförderzeug, beispielsweise eines Gabelstaplers, verringert wird.

Gemäß der Erfindung weisen die Stützelemente eine C-Form auf, die ein oberes Tragelement und ein unteres Tragelement aufweisen, wobei die Tragelemente mittels des mindestens einen Stützträgers miteinander verbunden sind, wobei das obere Tragelement an dem Tragrahmen befestigt ist und an dem unteren Tragelement die Stützrolle befestigt ist. Mit derartigen C-förmigen Stützelemente wird es in einfacher Weise ermöglicht, die Stützrollen zur Standsicherheitserhöhung weitestmöglich nach außen zu rücken und gleichzeitig Freiräume zu schaffen, in die die Tragleisten eines Routenzuganhängers hineinragen zu können, so dass der Transportwagen mit den Tragleisten des Routenzuganhängers aufgenommen und angehoben werden kann.

Gemäß einer vorteilhaften Ausgestaltungsform der Erfindung sind die Stützträger an dem Eckbereich jeweils von der Stirnaußenkante und der Längsaußenkante des Tragrahmens nach Innen versetzt angeordnet. Dadurch werden an der Stirnaußenkante und an der Längsaußenkante des Tragrahmen entsprechende Freiräume erzielt, in die die Tragleisten eines Routenzuganhängers hineinragen können, wodurch der Transportwagen sowohl längs als auch quer in einen Routenzuganhänger eingeführt und von den Tragleisten angehoben werden kann.

Das untere Tragelement weist gemäß einer vorteilhaften Ausgestaltungsform der Erfindung jeweils mit der Stirnaußenkante und der Längsaußenkante des Eckbereichs des Tragrahmens fluchtend angeordnete Außenkanten auf. Dadurch wird es ermöglicht, die Stützrolle an dem unteren Tragelement weitestmöglich nach außen an den Eckbereich des Transportwagens zu rücken.

Die Stützträger sind gemäß einer vorteilhaften Ausgestaltungsform der Erfindung von vertikal angeordneten Rohrprofilen oder vertikal angeordneten Tragplatten gebildet. Mit Rohrprofilen oder Tragplatten können in einfacher und kostengünstiger Weise entsprechende vertikal angeordnete Stützträger der Stützelemente gebildet werden.

Die unteren Tragelemente sind gemäß einer vorteilhaften Ausgestaltungsform der Erfindung von kastenartigen Trägern gebildet. Durch die Ausführung der unteren Tragelemente als kastenartige Träger kann mit einfachem Aufwand eine hohe Stabilität der unteren Tragelemente erzielt werden.

Die Stützelemente sind gemäß einer vorteilhaften Weiterbildung der Erfindung derart ausgebildet, dass von der C-Form der Stützelemente Freiräume gebildet werden, in die an einem Routenzuganhänger angeordnete höhenverstellbare Tragleisten zum Anheben des Transportwagens hineinragen können. Die an dem Routenzuganhänger angeordneten Tragleisten des Routenzuganhängers ragen somit in die von den C-förmigen Stützelementen gebildete Freiräume von den Außenseiten des Transportwagens hinein, so dass der Transportwagen mit den Tragleisten des Routenzuganhängers aufgenommen und angehoben werden kann.

Gemäß einer vorteilhaften Ausgestaltungsform der Erfindung ist an jedem Eckbereich des Tragrahmens jeweils ein Stützelement angeordnet, wobei jedes der vier Stützelemente mit jeweils einer Stützrolle versehen ist. Hierdurch kann insbesondere bei Transportwagen, die die Abmessungen einer standardisierten Europalette aufweisen, mit geringem Bauaufwand an den vier Eckbereichen jeweils eine Laufrolle möglichst weit außenliegend angeordnet werden.

Gemäß einer Weiterbildung der Erfindung sind hierbei die vier Stützelemente derart voneinander beabstandet an den Eckbereichen des Tragrahmens angeordnet, dass zwischen den vier Stützelementen ein in Längsrichtung des Transportwagens verlaufender Einfahrkanal und ein in Querrichtung des Transportwagens verlaufender Einfahrkanal für ein den Transportwagen unterfahrendes und anhebendes Transportfahrzeug ausgebildet ist. Die vier Stützelemente sind somit derart weit voneinander beabstandet angeordnet und derart hoch, dass der Tragrahmen des Transportwagens von einem Transportfahrzeug sowohl längs als auch quer unterfahren und angehoben werden kann.

Gemäß einer alternativen, ebenfalls vorteilhaften Ausgestaltungsform der Erfindung ist an gegenüberliegenden Stirnbereichen des Tragrahmens jeweils ein Stützelement angeordnet, wobei jedes der zwei Stützelement mit zwei Stützrollen versehen ist.

Hierdurch kann insbesondere bei Transportwagen, die die Abmessungen einer standardisierten Eurohalbpalette aufweisen, mit geringem Bauaufwand an den vier Eckbereichen jeweils eine Laufrolle möglichst weit außenliegend angeordnet werden

Gemäß einer Weiterbildung der Erfindung sind hierbei die zwei Stützelemente derart voneinander beabstandet an den gegenüberliegenden Stirnbereichen des Tragrahmens angeordnet, dass zwischen den zwei Stützelementen ein in Längsrichtung des Transportwagen verlaufender Einfahrkanal für ein den Transportwagen unterfahrendes und anhebendes Transportfahrzeug ausgebildet ist. Die beiden Stützelemente sind somit derart weit voneinander beabstandet angeordnet und derart hoch, dass der Tragrahmen des Transportwagens von einem Transportfahrzeug längs unterfahren und angehoben werden kann.

Gemäß einer vorteilhaften Weiterbildung ist der Tragrahmen an der Oberseite mit Befestigungsschnittstellen zur Befestigung von die Güter aufnehmenden Transportaufsätzen versehen. An derartigen Befestigungsschnittstellen können entsprechende Transportaufsätze in einfacher Weise befestigt werden. Mit den Befestigungsschnittstellen wird weiterhin eine modulare Gestaltung ermöglicht, die es ermöglicht, unterschiedliche Transportaufsätze in einfacher Weise auf dem Tragrahmen aufzubauen.

Zweckmäßigerweise ist an jedem Eckbereich des Tragrahmens jeweils eine Befestigungsschnittstelle angeordnet.

Die Erfindung betrifft weiterhin ein System umfassend einen Routenzuganhänger und mindestens einen erfindungsgemäßen Transportwagen, wobei der Routenzuganhänger höhenverstellbare Tragleisten aufweist, die mit der Unterseite des Tragrahmens in Wirkverbindung bringbar sind und in die von der C-Form der Stützelemente gebildeten Freiräume hineinragen. Bei dem erfindungsgemäßen Transportwagen können in einfacher Weise die höhenverstellbare Tragleisten jeweils in einen Freiraum der C-förmigen Stützelemente von außen hineinragen, so dass der Transportwagen von den Tragleisten angehoben werden kann. Weiterhin ermöglichen es die Stützelemente, die Stützrollen weitestmöglich weit außen an den Ecken des Tragrahmens anzuordnen, um eine hohe Standsicherheit des Transportwagens zu erzielen. Das erfindungsgemäße System führt somit zu Transportwagen, die eine hohe Standsicherheit aufweisen und die in Routenzuganhängern mit Tragleisten eingesetzt werden können.

Das System umfasst gemäß einer vorteilhaften Weiterbildung der Erfindung weiter ein Transportfahrzeug, das an der Oberseite eine Ladefläche zur Aufnahme des Tragrahmens des Transportwagens aufweist und das ausgebildet ist, dass das Transportfahrzeug den Transportwagen durch Einfahren in den zwischen den Stützelementen gebildeten Einfahrkanal unterfahren kann. Der erfindungsgemäße Transportwagen kann somit von Routenzuganhängern mit anhebbaren Tragleisten und von den Tragrahmen unterfahrenden Transportfahrzeugen transportiert werden, wobei eine Nutzung des Transportwagens in Kombination eines Trailerzuganhängers und eines Transportfahrzeugs möglich ist, indem ein automatisches Entladen bzw. Beladen des Trailerzuganhänger mit von autonomen Transportfahrzeugen transportierten Transportwagen ermöglicht wird.

Die Erfindung betrifft weiter ein System umfassend ein Transportfahrzeug und mindestens einen erfindungsgemäßen Transportwagen, wobei das Transportfahrzeug an der Oberseite eine Ladefläche zur Aufnahme des Tragrahmens des Transportwagens aufweist und das Transportfahrzeug ausgebildet ist, dass das Transportfahrzeug den Transportwagen durch Einfahren in den zwischen den Stützelementen gebildeten Einfahrkanal unterfahren kann. Bei dem erfindungsgemäßen Transportwagen kann mit den Stützelementen in einfacher Weise eine entsprechend große Bodenfreiheit des Tagrahmens erzielt werden und durch die beabstandete Anordnung der Stützelemente ein Einfahrkanal erzielt werden, so dass der Tragrahmen des Transportwagens von einem den Transportwagen unterfahrenden und anhebenden Transportfahrzeug, beispielsweise einem autonomen fahrerlosen Transportfahrzeug, unterfahren und angehoben werden kann.

Die Erfindung weist eine Reihe von Vorteilen auf.

Der erfindungsgemäße Transportwagen ist universell einsetzbar und kann in Routenzuganhängern mit Tragleisten eingesetzt werden, mit denen der Transportwagen für den Transport im Routenzuganhänger angehoben werden kann. Zudem kann der erfindungsgemäße Transportwagen mit den Gabelzinken eines Flurförderzeugs unterfahren und angehoben werden. Weiterhin kann durch entsprechenden Abstand und entsprechende Höhe der Stützelemente der erfindungsgemäße Transportwagen mit einem den Tragrahmen unterfahrenden Transportfahrzeugen, insbesondere autonomen Transportfahrzeugen, unterfahren und transportiert werden. Der erfindungsgemäße Transportwagen weist durch die Anordnung der Laufrollen an den C-förmigen Stützelementen eine hohe Standsicherheit auf und kann auch mit hohen Transportaufsätzen ohne Kippgefahr versehen werden. Der erfindungsgemäße Transportwagen ermöglicht eine modulare Gestaltung der Transportaufsätze und kann in einfacher Weise mit unterschiedlichen Transportaufsätzen versehen oder umgerüstet werden.

Der erfindungsgemäße Transportwagen ermöglicht aufgrund der C-förmigen Stützelemente, an denen die Stützrollen angeordnet sind und deren C-Form die Freiräume für die Tragleisten des Routenzuganhängers bilden, ein optimiertes Anheben im Routenzug mittels der Tragleisten, da die Aufnahmeposition der Tragleisten und die Positionierung der Laufrollen nicht mehr im Widerspruch stehen wie bei Transportwagen, bei denen die Laufrollen direkt an der Unterseite des Tragrahmens angeordnet sind. Beim Anheben und Absenken des in den Routenzuganhänger aufgenommenen erfindungsgemäßen Transportwagen mittels der Tragleisten sind weiterhin die Laufrollen des erfindungsgemäßen Transportwagens frei um eine vertikale Achse drehbar, da die Laufrollen in vertikaler Richtung unterhalb der Tragleisten angeordnet sind. Durch die Anordnung der Laufrollen in vertikaler Richtung unterhalb der Tragleisten wird weiterhin eine vertikale Trennung der Aufnahmeposition der Tragleisten und der Platzierung der Laufrollen erzielt, die ein verbessertes Einschieben und Ausschieben des Transportwagens in bzw. aus dem Routenzuganhänger ermöglicht ohne das aus Transportwagen, bei denen die Laufrollen direkt an der Unterseite des Tragrahmens angeordnet sind, bekannte Verkanten der Laufrollen mit dem Routenzuganhänger. Durch die Anordnung der Laufrollen in vertikaler Richtung unterhalb der Tragleisten und die dadurch erzielte vertikale Trennung der Aufnahmeposition der Tragleisten und der Platzierung der Laufrollen wird zudem ein Einschubkanal erzielt, der für die Tragleisten des Routenzuganhängers sowie für andere Transport- oder Hebevorgänge genutzt werden kann. Der erfindungsgemäße Transportwagen kann weiterhin in Kombination eines Trailerzuganhängers mit Tragleisten und eines den Transportwagen unterfahrenden Transportfahrzeugs verwendet werden, so dass in Verbindung mit einem autonom fahrenden Transportfahrzeug ein Routenzuganhänger automatisch mit den erfindungsgemäßen Transportwagen beladen und/oder entladen werden kann.

Weitere Vorteile und Einzelheiten der Erfindung werden anhand der in den schematischen Figuren dargestellten Ausführungsbeispiele näher erläutert. Hierbei zeigt
- Figur 1a: eine Draufsicht auf eine erste Ausführungsform eines erfindungsgemäßen Transportwagens,
- Figur 1b: eine Seitenansicht gemäß Pfeil X der Figur 1a,
- Figur 1c: eine Seitenansicht gemäß Pfeil Y der Figur 1a,
- Figur 1d: eine perspektive Darstellung des Transportwagens der Figuren 1a bis 1c,
- Figur 1e: einen Ausschnitt der Figur 1d in einer vergrößerten Darstellung,
- Figur 2a: eine Draufsicht auf eine zweite Ausführungsform eines erfindungsgemäßen Transportwagens,
- Figur 2b: eine Seitenansicht gemäß Pfeil X der Figur 2a,
- Figur 2c: eine Seitenansicht gemäß Pfeil Y der Figur 2a,
- Figur 2d: eine perspektive Darstellung des Transportwagens der Figuren 2a bis 2c,
- Figur 2e: einen Ausschnitt der Figur 2d in einer vergrößerten Darstellung,
- Figur 3a: eine Draufsicht auf eine dritte Ausführungsform eines erfindungsgemäßen Transportwagens,
- Figur 3b: eine Seitenansicht gemäß Pfeil X der Figur 3a,
- Figur 3c: eine Seitenansicht gemäß Pfeil Y der Figur 3a,
- Figur 3d: eine perspektive Darstellung des Transportwagens der Figuren 3a bis 3c,
- Figur 3e: einen Ausschnitt der Figur 3d in einer vergrößerten Darstellung,
- Figur 4a: ein erfindungsgemäßes System mit einem Trailerzuganhänger und aufgenommen erfindungsgemäßen Transportwagen in einer perspektivischen Darstellung,
- Figur 4b: das System der Figur 4a in einer Seitenansicht,
- Figur 4c: einen Ausschnitt der Figur 4b in einer vergrößerten Darstellung
- Figur 5a: ein erfindungsgemäßes System mit einem erfindungsgemäßen Transportwagen der Figuren 1a bis 1e und einem den Transportwagen in Längsrichtung unterfahrenem Transportfahrzeug,
- Figur 5b: ein erfindungsgemäßes System mit einem erfindungsgemäßen Transportwagen der Figuren 1a bis 1e und einem den Transportwagen in Querrichtung unterfahrenem Transportfahrzeug und
- Figuren 6a-6d: erfindungsgemäßen Transportwagen mit verschiedenen Transportaufsätzen.

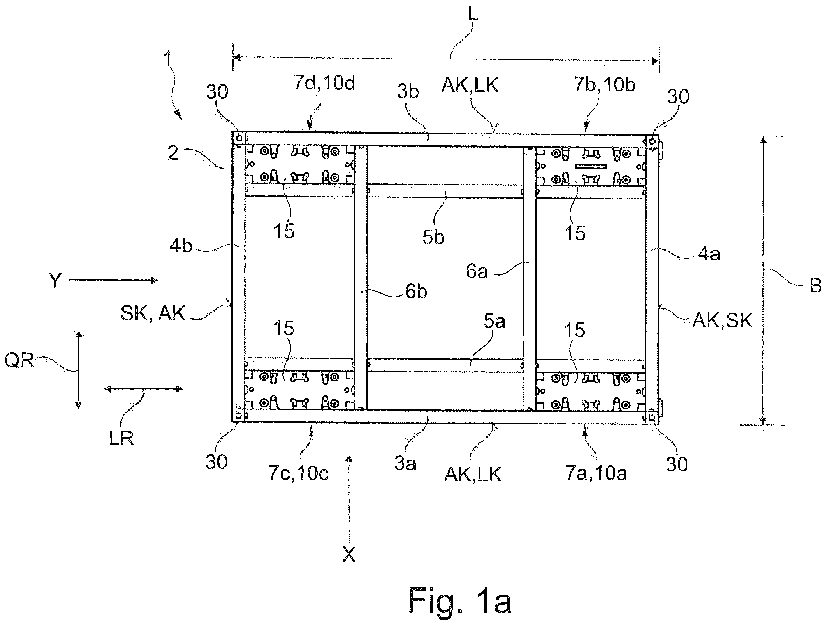

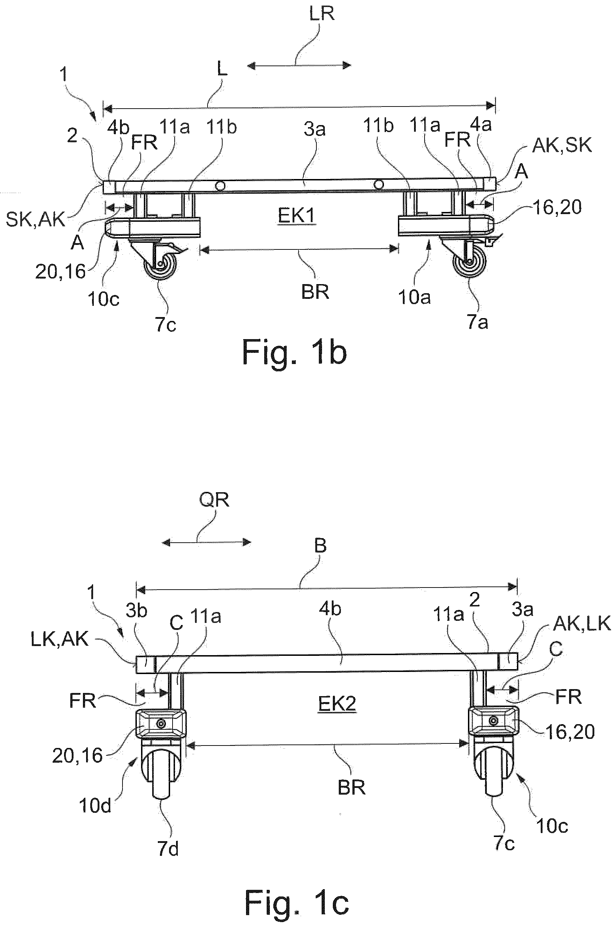

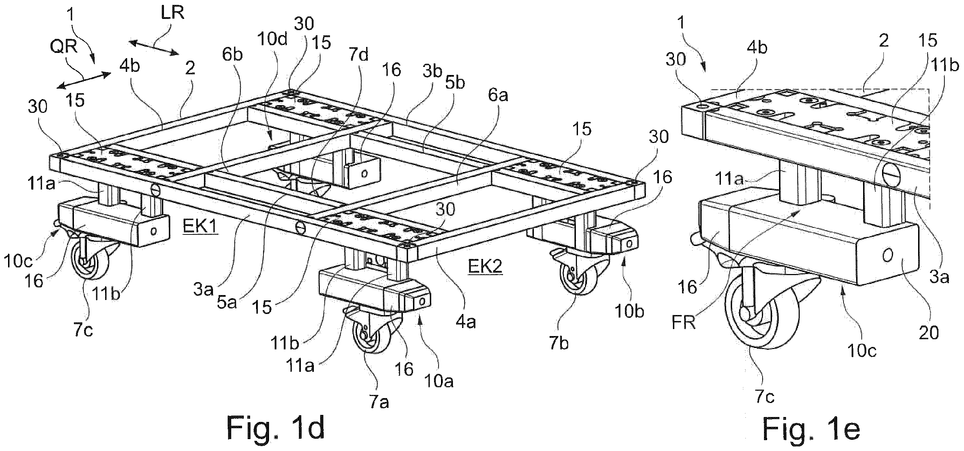

In den Figuren 1a bis 3e sind drei verschiedene Ausführungsformen erfindungsgemäßer Transportwagen 1 dargestellt. Gleiche Bauteile sind hierbei mit gleichen Bezugsziffern versehen.

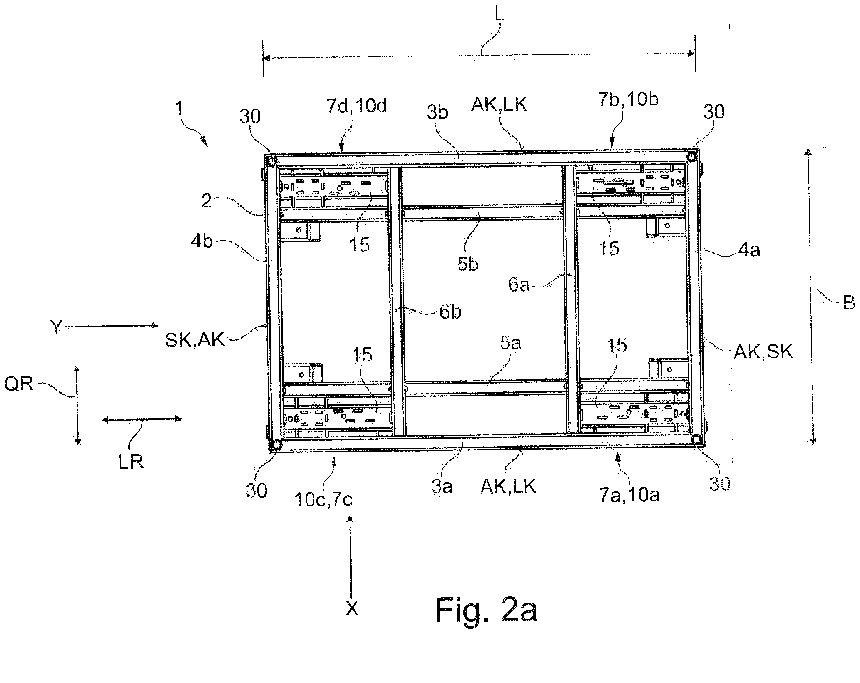

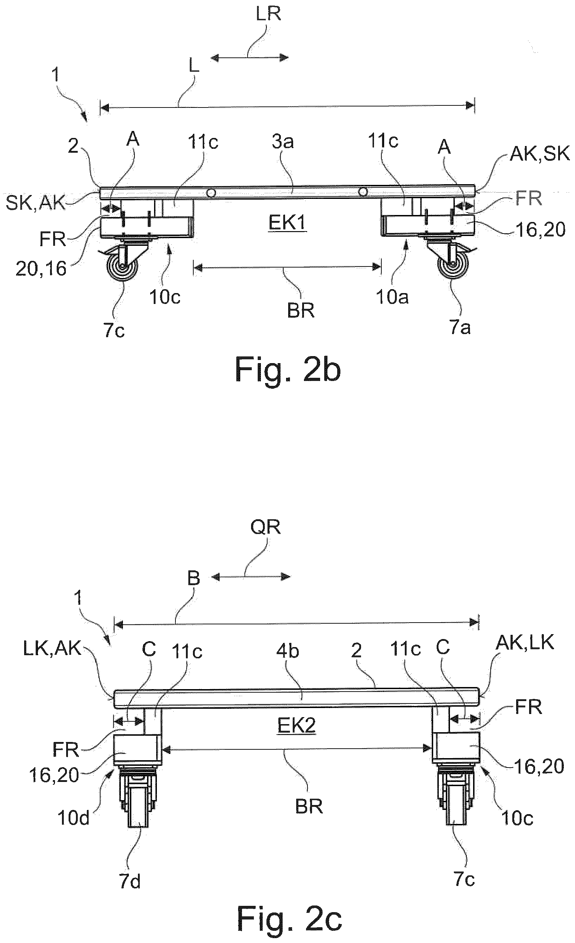

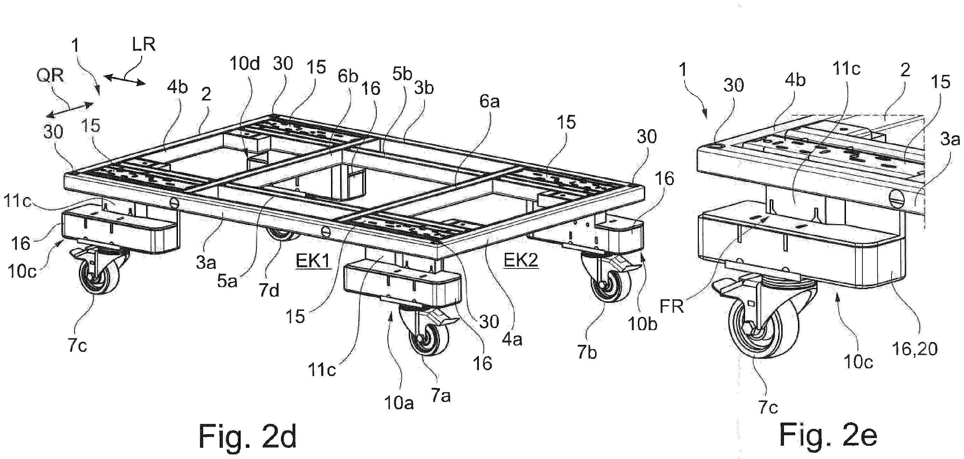

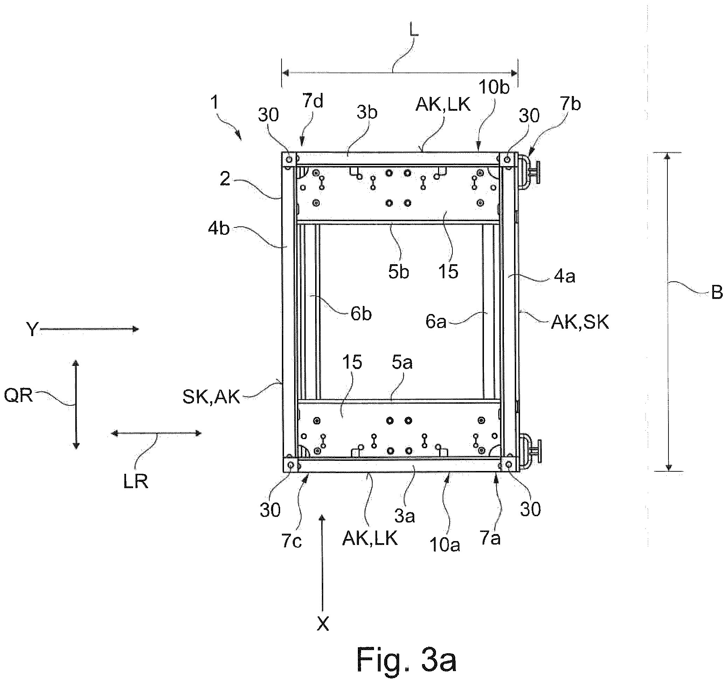

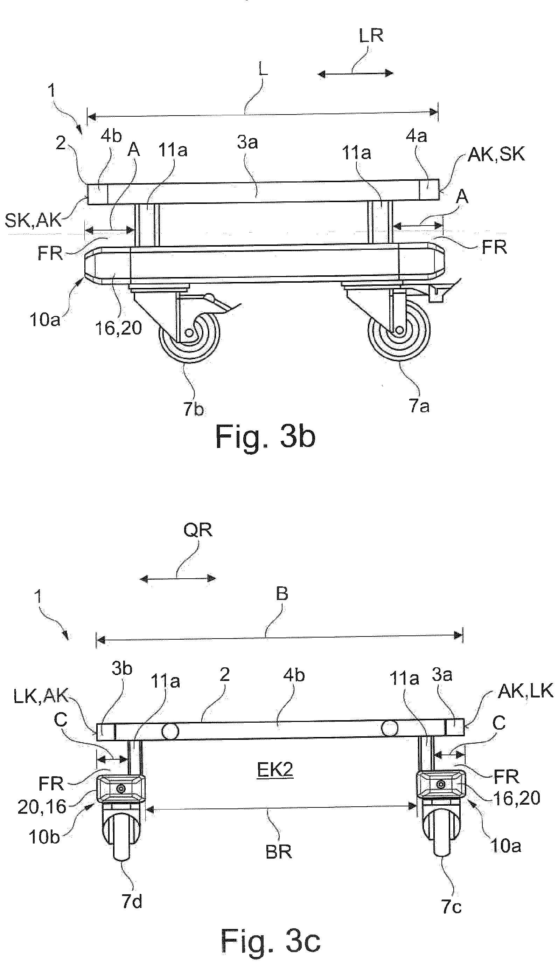

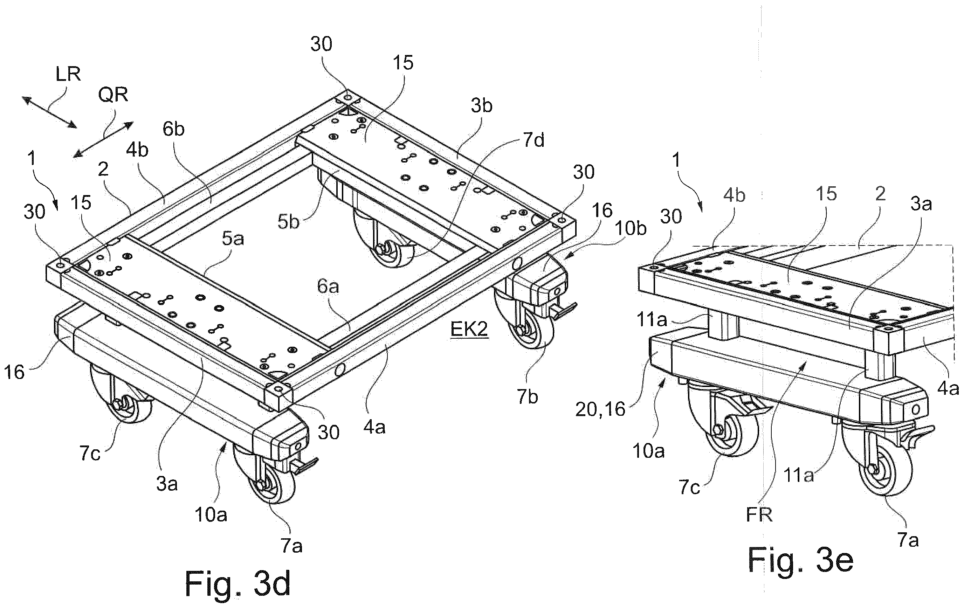

Die in den Figuren 1a bis 3e dargestellten Transportwagen 1 weisen jeweils einen rechteckförmigen Tragrahmen 2 auf. Die Tragrahmen 2 weisen eine Länge L und eine Breite B auf. In den beiden Ausführungsformen der Figuren 1a-1e und 2a-2e ist Länge L größer als die Breite B ist. In der Ausführungsform der Figur 3a-3e ist Länge L kleiner als die Breite B ist.

Der Tragrahmen 2 weist jeweils seitliche Längsträger 3a, 3b auf, die jeweils an der Außenseite des Tragrahmens 2 ausgebildet sind. Die Längsträger 3a, 3b sind an den Enden mittels zwei seitlichen Querträgern 4a, 4b miteinander verbunden. Die Querträger 4a, 4b sind ebenfalls jeweils an der Außenseite des Tragrahmens 2 ausgebildet. Weiterhin können zusätzliche Längsträger 5a, 5b vorgesehen sein, die bezüglich der äußeren Längsträger 3a, 3b nach Innen beabstandet angeordnet sind. Weiterhin können zusätzliche Querträger 6a, 6b vorgesehen sein, die bezüglich der äußeren Querträger 4a, 4b nach Innen beabstandet angeordnet sind.

An den vier Eckbereichen des Tragrahmens 2 ist an der Unterseite des Tragrahmens 2 jeweils eine Laufrolle 7a, 7b, 7c, 7d angeordnet, mit denen der Transportwagen 1 auf einer Fahrbahn abgestützt ist. Die Laufrolle 7a-7d sind nicht angetrieben und um eine vertikale Achse lenkbar. Die Laufrollen 7a-7d sind bevorzugt als Nachlaufrollen und somit als passiv gelenkte Laufrollen 7a-7d ausgebildet.

Erfindungsgemäß sind an dem Tragrahmen 2 sich nach vertikal unten, in Richtung zur Fahrbahn erstreckende Stützelemente 10a, 10b, 10c, 10d angeordnet, an denen die Laufrollen 7a, 7b, 7c, 7d befestigt sind. Die Stützelemente 10a, 10b, 10c, 10d sind an den Eckbereichen des Tragrahmens 2 angeordnet. Die Stützelemente 10a-10d weisen jeweils mindestens einen nach vertikal unten, in Richtung zur Fahrbahn verlaufenden Stützträger 11a, 11b (Figuren 1a-1e) bzw. 11a (Figuren 3a-3e) bzw. 11c (Figuren 2a-2e) auf, der im Eckbereich des Tragrahmens 2 von zumindest einer Außenkante AK des Tragrahmens 2 nach innen beabstandet angeordnet ist.

Die Stützelemente 10a-10d weisen jeweils eine C-Form auf (Figuren 1c, 2c, 3c) und bestehen jeweils aus einem oberen Tragelement 15, einem unteren Tragelement 16, die mittels des mindestens einen Stützträgers 11a bzw. 11b bzw. 11c miteinander verbunden sind. Das obere Tragelement 15 ist an dem Tragrahmen 2 befestigt. An dem unteren Tragelement 16 ist die jeweilige Stützrolle 7a-7d befestigt.

Das untere Tragelement 16 weist bevorzugt jeweils mit der Stirnaußenkante SK und der Längsaußenkante LK des Tragrahmens 2 fluchtend angeordnete Außenkanten auf.

In den Figuren 1a-1e weist jedes Stützelement 10a-10d jeweils zwei Stützträger 11a, 11b auf, die von vertikal angeordneten Rohrprofilen gebildet sind und die in Fahrzeuglängsrichtung LR des Transportwagens 1 voneinander beabstandet angeordnet sind. Die den Stirnaußenkanten SK zugewandten vorderen Stützträger 1 1a sind an dem entsprechenden Eckbereich jeweils von der Stirnaußenkante SK und der Längsaußenkante LK des Tragrahmens 2 nach Innen versetzt angeordnet. Der entsprechende Stützträger 11a ist hierbei von der Stirnaußenkante SK des Tragrahmens 2 um den Abstand A in Fahrzeuglängsrichtung LR nach Innen beabstandet und von der Längsaußenkante LK des Tragrahmens 2 um den Abstand C in Fahrzeugquerrichtung QR nach Innen beabstandet. Die Stützträger 11b eines Stützelements 10a-10b sind jeweils mit dem Stützträger 11a des entsprechenden Stützelements 10a-10b in Fahrzeuglängsrichtung LR fluchtend und in Fahrzeuglängsrichtung LR beabstandet angeordnet.

Die unteren Tragelemente 16 sind in den Figuren 1a-1e von kastenartigen Trägern 20 gebildet, die sich in Fahrzeuglängsrichtung LR erstrecken.

In den Figuren 2a-2e weist jedes Stützelement 10a-10d jeweils einen Stützträger 11c auf, der von einer vertikal angeordneten Tragplatte gebildet ist, die sich in Fahrzeuglängsrichtung LR des Transportwagens 1 erstreckt. Die Tragplatten sind an dem entsprechenden Eckbereich jeweils von der Stirnaußenkante SK und der Längsaußenkante LK des Tragrahmens 2 nach Innen versetzt angeordnet. Die entsprechende Tragplatte ist hierbei von der Stirnaußenkante SK des Tragrahmens 2 um den Abstand A in Fahrzeuglängsrichtung LR nach Innen beabstandet und von der Längsaußenkante LK des Tragrahmens 2 um den Abstand C in Fahrzeugquerrichtung QR nach Innen beabstandet.

Die unteren Tragelemente 16 sind in den Figuren 2a-2e von kastenartigen Trägern 20 gebildet, die sich in Fahrzeuglängsrichtung LR erstrecken.

In den Ausführungsbeispielen der Figuren 1a-1e und 2a-2e ist an jedem Eckbereich des Tragrahmens 2 jeweils ein Stützelement 10a-10d angeordnet, wobei jedes der vier Stützelement 10a-10d mit jeweils einer Stützrolle 7a-7d versehen ist. Im Folgenden werden die Stützelemente 10a, 10b als vordere Stützelemente, die Stützelemente 10c, 10d als hintere Stützelemente, die Stützelemente 10a, 10c als rechte Stützelemente und die Stützelemente 10b, 10d als linke Stützelemente bezeichnet.

Die beiden vorderen Stützelemente 10a, 10b sind derart von den beiden hinteren Stützelementen 10c, 10d in Fahrzeuglängsrichtung LR voneinander beabstandet an den Eckbereichen des Tragrahmens 2 angeordnet, dass zwischen den vier Stützelementen 10a-10d ein in Fahrzeugquerrichtung QR des Transportwagens 1 verlaufender Einfahrkanal EK1 gebildet ist. Der Einfahrkanal EK1 weist eine Breite BR auf. Die beiden linken Stützelemente 10b, 10d sind derart von den beiden rechten Stützelementen 10a, 10c in Fahrzeugquerrichtung QR voneinander beabstandet an den Eckbereichen des Tragrahmens 2 angeordnet, dass zwischen den vier Stützelementen 10a-10d ein in Fahrzeuglängsrichtung LR des Transportwagens 1 verlaufender Einfahrkanal EK2 gebildet ist. Der Einfahrkanal EK2 weist bevorzugt dieselbe Breite BR wie der Einfahrkanal EK1 auf.

Der Transportwagen 1 der Figuren 1a-1e und der Transportwagen der Figuren 2a-2e weisen bevorzugt dieselbe Länge L und dieselbe Breite B auf. Der Transportwagen 1 der Figuren 1a-1e und der Transportwagen 1 der Figuren 2a-2e weisen bevorzugt im Wesentlichen die Länge L und die Breite B einer Europalette auf. Bei dem Transportwagen 1 der Figuren 2a-2e sind die Stützelemente 10a-10d und die Stützrollen 7a-7b gegenüber der Ausführung der Stützelemente 10a-10d und der Stützrollen 7a-7b des Transportwagens 1 der Figuren 1a-1e stabiler ausgeführt, so dass der Transportwagen 1 der Figuren 2a-2e eine höhere Traglast aufweist als der Transportwagen 1 der Figuren 1a-1e.

Der Transportwagen 1 der Figuren 3a-3e weist bevorzugt im Wesentlichen die Länge L und die Breite B einer Eurohalbpalette auf. Die Länge L des Transportwagens 1 der Figuren 3a-3e entspricht hierbei der halben Länge L der Transportwagen 1 der Figuren 1a-2e und die Breite B des Transportwagens 1 der Figuren 3a-3e entspricht der Breite B der Transportwagen 1 der Figuren 1a-2e.

In dem Ausführungsbeispiel der Figuren 3a-3e ist an gegenüberliegenden Stirnbereichen des Tragrahmens 2 jeweils ein Stützelement 10a, 10b angeordnet, wobei jedes der zwei Stützelement 10a bzw. 10b mit jeweils zwei Stützrollen 7a, 7c bzw. 7b, 7d versehen ist. Jedes Stützelement 10a, 10b erstreckt sich somit über zwei Eckbereiche des Tragrahmens 2. Im Folgenden wird das Stützelement 10a als rechtes Stützelement und das Stützelement 10b als linkes Stützelemente bezeichnet. Die Stützelemente 10a, 10b erstrecken sich jeweils über die gesamte Fahrzeuglänge L.

Das Stützelemente 10a ist mit den beiden linken Stützrollen 7a, 7c versehen und das Stützelement 10b mit den beiden rechten Stützrollen 7b, 7d.

Das linke Stützelemente 10a ist derart von dem rechten Stützelement 10b in Fahrzeugquerrichtung QR beabstandet am Tragrahmen 2 angeordnet, dass zwischen den beiden Stützelementen 10a, 10b ein in Fahrzeuglängsrichtung LR des Transportwagens 1 verlaufender Einfahrkanal EK2 gebildet ist. Der Einfahrkanal EK2 weist eine Breite BR auf. Die Breite BR des Einfahrkanals EK2 des Transportwagens 1 der Figuren 3a-3d entspricht im Wesentlichen der Breite BR der Einfuhrkanäle EK, EK2 der Transportwagen der Figuren 1a bis 2e.

In den Figuren 3a-3e weist jedes Stützelement 10a, 10b jeweils zwei Stützträger 11a auf, die von vertikal angeordneten Rohrprofilen gebildet sind und die in Fahrzeuglängsrichtung LR des Transportwagens 1 voneinander beabstandet angeordnet sind. Die Stützträger 11a sind jeweils von der Stirnaußenkante SK und der Längsaußenkante LK des Tragrahmens 2 nach Innen versetzt angeordnet. Der entsprechende Stützträger 11a ist hierbei jeweils von der Stirnaußenkante SK des Tragrahmens 2 um den Abstand A in Fahrzeuglängsrichtung LR nach Innen beabstandet und von der Längsaußenkante LK des Tragrahmens 2 um den Abstand C in Fahrzeugquerrichtung QR nach Innen beabstandet.

Die unteren Tragelemente 16 sind in den Figuren 3a-3e von kastenartigen Trägern 20 gebildet, die sich in Fahrzeuglängsrichtung LR über die gesamte Fahrzeuglänge L erstrecken.

Aus den Figuren 1a bis 3e ist weiter ersichtlich, dass von der C-Form der Stützelemente 10a-10d von der jeweiligen Fahrzeugaußenseite her zugängliche Freiräume FR zwischen der Unterseite des Tragrahmens 2 und der Oberseite der unteren Tragelemente 16 gebildet werden, in die an einem Routenzuganhänger angeordnete höhenverstellbare Tragleisten zum Anheben des Transportwagens 1 hineinragen können. Da die Stützträger 11a bzw. 11c jeweils von der Längsaußenkante LK und der Stirnaußenkante SK des Tragrahmens 2 nach innen versetzt und beabstandet angeordnet sind, werden an allen vier Fahrzeugseiten ein entsprechender von außen zugänglicher Freiraum FR jeweils unter den Längsträgern 3a, 3b gebildet, der sich jeweils über die gesamte Fahrzeuglänge L erstreckt, sowie jeweils unter den Querträgern 4a, 4b gebildet, der sich jeweils über die gesamte Fahrzeugbreite Q erstreckt.

Darüber hinaus ermöglichen es die C-förmigen Stützelemente 10a-10d, dass die Stützrollen 7a-7d weitestmöglich nach Außen an die Eckbereiche des Tragrahmens 2 gerückt und angeordnet werden können. Die Stützrollen 7a-7d sind an den Stützelementen 10a-10d in vertikaler Richtung unterhalb der entsprechenden Freiräume FR der C-Profile der Stützelemente 10a-10d angeordnet.

Die Freiräume FR an den vier Außenseite unterhalb der Längsträger 3a, 3b sowie unterhalb der Querträger 4a, 4b und die Einfahrkanäle EK1 bzw. EK2 ermöglichen es weiterhin, dass der Tragrahmen 2 mit den Gabelzinken eines Flurförderzeugs unterfahren und angehoben werden kann.

Die Einfahrkanäle EK1 bzw. EK2 ermöglichen es, dass ein Transportfahrzeug den Tragrahmen 2 unterfahren und zum Transport des Transportwagens 1 anheben kann.

Wie aus den Figuren 1a bis 3e ersichtlich ist, ist der Tragrahmen 2 an der Oberseite mit Befestigungsschnittstellen 30 zur Befestigung von in den Figuren 1a bis 3e nicht näher dargestellten die Güter aufnehmenden Transportaufsätzen versehen.

In den dargestellten Ausführungsbeispielen ist hierzu an jedem Eckbereich des Tragrahmens 2 jeweils eine Befestigungsschnittstelle 30 angeordnet. Die Befestigungsschnittstelle 30 kann als Bohrung in dem Längsträger 3a, 3b bzw. dem Querträger 4a, 4b ausgebildet sein.

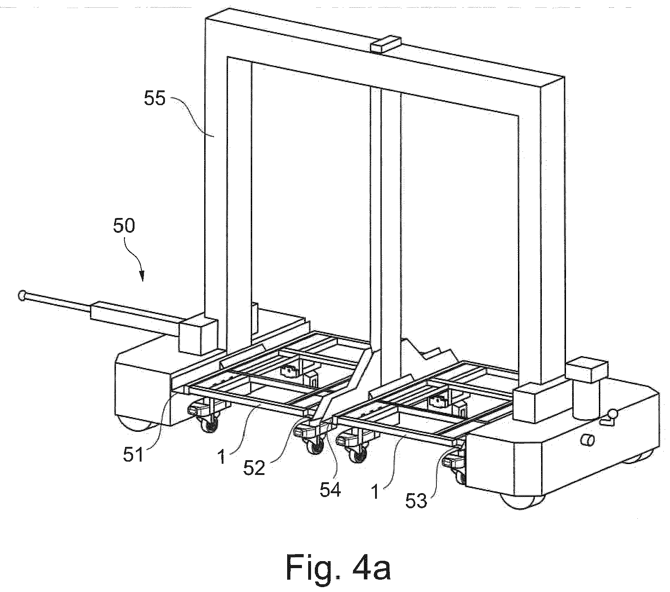

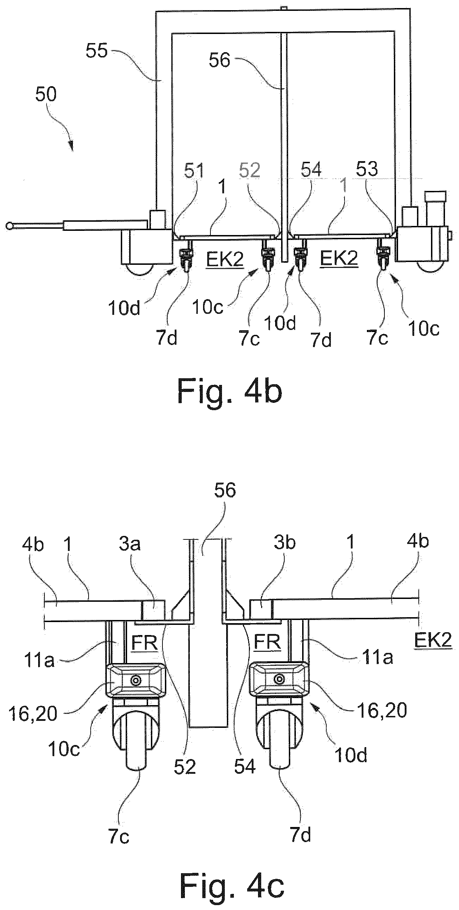

Die Figuren 4a bis 4c zeigen ein erfindungsgemäßes System mit einem Routenzuganhänger 50, der mindestens einen erfindungsgemäßen Transportwagen 1 aufnehmen kann. Im dargestellten Ausführungsbeispiel ist der Routenzuganhänger 50 ausgebildet, zwei Transportwagen 1 gemäß den Figuren 1a-1e aufzunehmen. Der Routenzuganhänger 50 weist für die Aufnahme des vorderen Transportwagens 1 zwei höhenverstellbare Tragleisten 51, 52 und für die Aufnahme des hinteren Transportwagens 1 zwei höhenverstellbare Tragleisten 53, 54. Die Tragleisten 51, 53 sind an einem Brückenrahmen 55 angeordnet, der bezüglich eines Fahrwerks des Routenzuganhängers 50 anhebbar und absenkbar ist. Die Tragleisten 52, 54 sind an einem an einem an dem Brückenrahmen 55 angeordneten Träger 56 angeordnet.

Der vordere Transportwagen 1 wird zur Aufnahme in dem Routenzuganhänger 50 mit seiner Fahrzeuglängsrichtung in Fahrzeugquerrichtung des Routenzuganhängers 50 zwischen die Tragleisten 51, 52 eingeschoben. Die Tragleisten 51, 52 ragen hierbei jeweils in den von den C-förmigen Stützelementen 10a-10d gebildeten, in Längsrichtung des Transportwagens 1 verlaufenden Freiraum FR unter den Längsträgern 3a, 3b des Tragrahmens 2 hinein. Durch Anheben der beiden Tragleisten 51, 52 gelangen die Tragleisten 51, 52 in Kontakt mit der Unterseite der Längsträger 3a, 3b und somit der Unterseite des Tragrahmens 2, so dass der Transportwagen 1 für den Transport im Routenzuganhänger 50 derart angehoben wird, dass die Laufrollen 7a-7d von der Fahrbahn abheben. Entsprechend wird der hintere Transportwagen 1 zur Aufnahme in dem Routenzuganhänger 50 mit seiner Fahrzeuglängsrichtung in Fahrzeugquerrichtung des Routenzuganhängers 50 zwischen die Tragleisten 53, 54 eingeschoben. Die Tragleisten 53, 54 ragen hierbei jeweils in den von den C-förmigen Stützelementen 10a-10d gebildeten, in Längsrichtung des Transportwagens 1 verlaufenden Freiraum FR unter den Längsträgern 3a, 3b des Tragrahmens 2 hinein. Durch Anheben der beiden Tragleisten 53, 54 gelangen die Tragleisten 53, 54 in Kontakt mit der Unterseite der Längsträger 3a, 3b und somit der Unterseite des Tragrahmens 2, so dass der Transportwagen 1 für den Transport im Routenzuganhänger 50 derart angehoben wird, dass die Laufrollen 7a-7d von der Fahrbahn abheben.

Es versteht sich, dass der Routenzuganhänger 50 auch derart ausgebildet sein kann, dass mit den zwei Tragleisten 51, 52 bzw. 53, 54 ein Transportwagen 1 in seiner Fahrzeugquerrichtung aufgenommen werden kann. Der Transportwagen 1 wird hierzu zur Aufnahme in dem Routenzuganhänger 50 mit seiner Fahrzeugquerrichtung in Fahrzeugquerrichtung des Routenzuganhängers 50 zwischen die Tragleisten 51, 52 bzw. 53, 54 eingeschoben. Die Tragleisten 51, 52 bzw. 53, 54 ragen hierbei jeweils in den von den C-förmigen Stützelementen 10a-10d gebildeten, in Querrichtung des Transportwagens 1 verlaufenden Freiraum FR unter den Querträgern 4a, 4b des Tragrahmens 2 hinein. Durch Anheben der beiden Tragleisten 51, 52 gelangen die Tragleisten 51, 52 in Kontakt mit der Unterseite der Querträger 4a, 4b und somit der Unterseite des Tragrahmens 2, so dass der Transportwagen 1 für den Transport im Routenzuganhänger 50 derart angehoben wird, dass die Laufrollen 7a-7d von der Fahrbahn abheben.

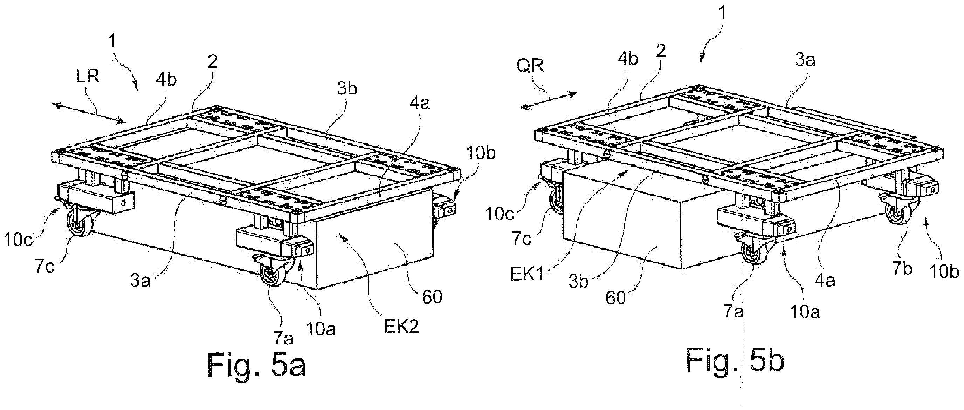

Die Figuren 5a und 5b zeigen ein erfindungsgemäßes System mit einem Transportfahrzeug 60 und mindestens einem erfindungsgemäßen Transportwagen 1. Das Transportfahrzeug 60 ist als autonomes Transportfahrzeug ausgebildet, das an der Oberseite eine Ladefläche zur Aufnahme des Tragrahmens 2 des Transportwagens 1 aufweist. Die Ladefläche ist bevorzugt anhebbar und absenkbar.

Die Stützelemente 10a-10d des erfindungsgemäßen Transportwagens 1 weisen einer derartige Höhe auf und das Transportfahrzeug 60 ist derart ausgebildet, dass das Transportfahrzeug 60 den Transportwagen 1 durch Einfahren in den zwischen den Stützelementen 10a-10d gebildeten Einfahrkanal EK1 bzw. EK2 unterfahren und durch Anheben der Ladefläche den Tragrahmen 2 und somit den Transportwagen 1 anheben kann. In der Figur 5a ist das Transportfahrzeug 60 in den in Fahrzeuglängsrichtung LR des Transportwagens 1 verlaufender Einfahrkanal EK2 eingefahren. In der Figur 5b ist das Transportfahrzeug 60 in den in Fahrzeugquerrichtung QR des Transportwagens 1 verlaufender Einfahrkanal EK1 eingefahren.

In Verbindung mit den Figuren 4a bis 4c ist weiter deutlich, dass mit einem autonomen Transportfahrzeug 60, das gemäß der Figur 5a in den in Fahrzeuglängsrichtung LR des Transportwagens 1 verlaufenden Einfahrkanal EK2 eingefahren ist, der Routenzuganhänger 50 automatisch mit Transportwagen 1 beladen und entladen werden kann.

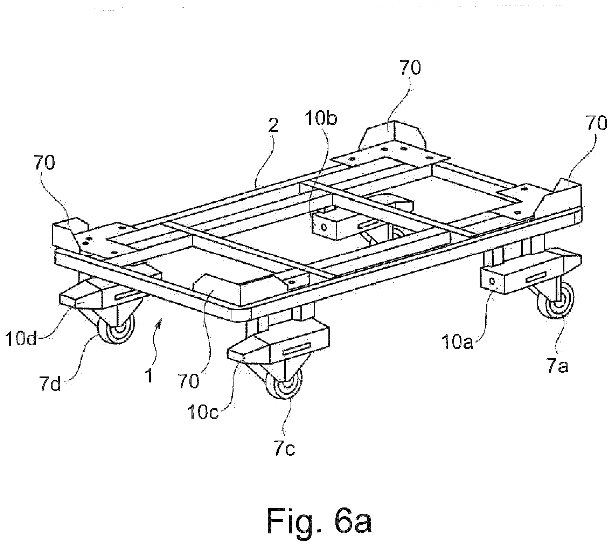

Die Figuren 6a bis 6d zeigen eine erfindungsgemäßen Transportwagen 1, der an den Befestigungsschnittstellen 30 mit verschiedenen Transportaufsätzen versehen ist.

In dem Ausführungsbeispiel der Figur 6a sind an den vier Eckbereichen des Tragrahmens 2 an der Oberseite des Tragrahmens 2 jeweils winkelförmiger Halter 70 an den Befestigungsschnittstellen 30 des Tragrahmens 2 als Transportaufsatz befestigt, die einen auf den Transportwagen 1 abgelegten Ladungsträger, beispielsweise eine Palette oder eine Gitterbox, gegen Verrutschen sichern.

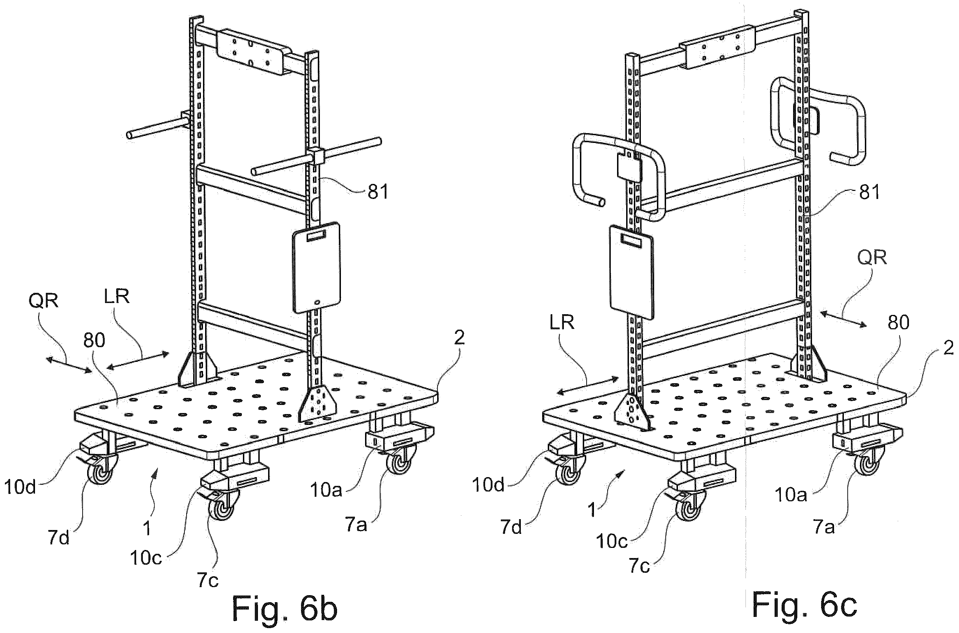

In den Ausführungsbeispielen der Figuren 6b und 6c ist an den vier Eckbereichen des Tragrahmens 2 an der Oberseite des Tragrahmens 2 jeweils eine Tragplatte 80 an den Befestigungsschnittstellen 30 des Tragrahmens 2 befestigt. An der Tragplatte 80 ist ein bügelartiger Ladungsträger 81 als Transportaufsatz befestigt. In der Figur 6b ist der Ladungsträger 81 in Fahrzeuglängsrichtung LR mittig angeordnet und erstreckt sich in Fahrzeugquerrichtung QR. In der Figur 6c ist der Ladungsträger 81 in Fahrzeugquerrichtung QR mittig angeordnet und erstreckt sich in Fahrzeuglängsrichtung LR. An dem Ladungsträger 81 können entsprechende nicht näher dargestellte Werkstückträger befestigt werden, in denen entsprechende Werkstücke als zu transportierende Güter gehalten werden.

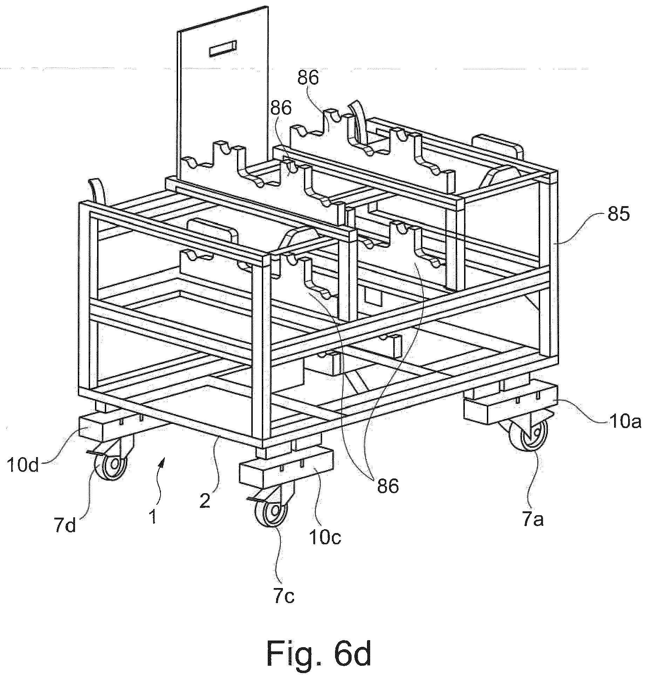

In dem Ausführungsbeispiel der Figur 6d ist an den vier Eckbereichen des Tragrahmens 2 an der Oberseite des Tragrahmens 2 ein truhenartiger Ladungsträger 85 an den Befestigungsschnittstellen 30 des Tragrahmens 2 als Transportaufsatz befestigt. Der truhenartiger Ladungsträger 85 ist mit Halterungen 86 versehen, in die entsprechende Werkstücke als zu transportierende Güter eingelegt werden können.

Wie aus den Figuren 6a bis 6d ersichtlich ist, ermöglichen die Befestigungsschnittstellen 30 an dem Tragrahmen 2 einen modularen Aufbau mit verschiedenen Transportaufsätzen, der es ermöglicht, den Transportwagen 1 durch entsprechende Transportaufsätze an verschiedene zu transportierende Güter anzupassen und umzurüsten, beispielsweise an Paletten oder Gitterboxen (Figur 6a), an Sonderladungsträger (Figuren 6b, 6c) oder an individuelle Aufbauten (Figur 6d).

## Patentansprüche

1. Transportwagen (1) zum Transportieren und Lagern von Gütern, der einen rechteckförmigen Tragrahmen (2) aufweist, an dessen Unterseite an den vier Eckbereichen jeweils eine Laufrolle (7a-7d) angeordnet ist, mit denen sich der Transportwagen (1) auf einer Fahrbahn abstützt, wobei an dem Tragrahmen (2) sich nach vertikal unten erstreckende Stützelemente (10a; 10b; 10c; 10d) angeordnet sind, an denen die Laufrollen (7a; 7b; 7c; 7d) befestigt sind, wobei die Stützelemente (10a; 10b; 10c; 10d) an den Eckbereichen des Tragrahmens (2) angeordnet sind und die Stützelemente (10a; 10b; 10c; 10d) jeweils mindestens einen im Eckbereich des Tragrahmens (2) von zumindest einer Außenkante (AK, LK, SK) des Tragrahmens (2) nach innen beabstandet angeordneten und nach vertikal unten verlaufenden Stützträger (11a, 11b; 11c) aufweisen, **dadurch gekennzeichnet, dass** die Stützelemente (10a; 10b; 10c; 10d) eine C-Form aufweisen, die ein oberes Tragelement (15) und ein unteres Tragelement (16) aufweisen, wobei die Tragelemente (15, 16) mittels des mindestens einen Stützträgers (11a; 11b; 11c) verbunden sind, wobei das obere Tragelement (15) an dem Tragrahmen (2) befestigt ist und an dem unteren Tragelement (16) die Stützrolle (7a; 7b; 7c; 7d) befestigt ist.

2. Transportwagen nach Anspruch 1, **dadurch gekennzeichnet, dass** die Stützträger (11a, 11b; 11c) an dem Eckbereich des Tragrahmens (2) jeweils von der Stirnaußenkante (SK) und der Längsaußenkante (LK) des Tragrahmens (2) nach Innen versetzt angeordnet sind.

3. Transportwagen nach Anspruch 1 oder 2, **dadurch gekennzeichnet, dass** das untere Tragelement (16) jeweils mit der Stirnaußenkante (SK) und der Längsaußenkante (LK) des Eckbereichs des Tragrahmens (2) fluchtend angeordnete Außenkanten aufweist.

4. Transportwagen nach einem der Ansprüche 1 bis 3, **dadurch gekennzeichnet, dass** die Stützträger (11a; 11b; 11c) von vertikal angeordneten Rohrprofilen oder vertikal angeordneten Tragplatten gebildet sind.

5. Transportwagen nach einem der Ansprüche 1 bis 4, **dadurch gekennzeichnet, dass** die unteren Tragelemente (16) von kastenartigen Trägern (20) gebildet sind.

6. Transportwagen nach einem der Ansprüche 1 bis 5, **dadurch gekennzeichnet, dass** die Stützelemente (10a; 10b; 10c; 10d) derart ausgebildet sind, dass von der C-Form der Stützelemente (10a; 10b; 10c; 10d) Freiräume (FR) gebildet werden, in die an einem Routenzuganhänger (50) angeordnete höhenverstellbare Tragleisten (51; 52; 53; 54) zum Anheben des Transportwagens (1) hineinragen können.

7. Transportwagen nach einem der Ansprüche 1 bis 6, **dadurch gekennzeichnet, dass** an jedem Eckbereich des Tragrahmens (2) jeweils ein Stützelement (10a; 10b; 10c; 10d) angeordnet ist, wobei jedes der vier Stützelemente (10a; 10b; 10c; 10d) mit jeweils einer Stützrolle (7a; 7b; 7c; 7d) versehen ist.

8. Transportwagen nach Anspruch 7, **dadurch gekennzeichnet, dass** die vier Stützelemente (10a; 10b; 10c; 10d) derart voneinander beabstandet an den Eckbereichen des Tragrahmens (2) angeordnet sind, dass zwischen den vier Stützelementen (10a; 10b; 10c; 10d) ein in Längsrichtung (LR) des Transportwagens (1) verlaufender Einfahrkanal (EK2) und ein in Querrichtung (QR) des Transportwagens (1) verlaufender Einfahrkanal (EK1) für ein den Transportwagen (1) unterfahrendes und anhebendes Transportfahrzeug (60) ausgebildet ist.

9. Transportwagen nach einem der Ansprüche 1 bis 6, **dadurch gekennzeichnet, dass** an gegenüberliegenden Stirnbereichen des Tragrahmens (2) jeweils ein Stützelement (10a, 10b) angeordnet ist, wobei jedes der zwei Stützelemente (10a; 10b) mit zwei Stützrollen (7a, 7c; 7b, 7d) versehen ist.

10. Transportwagen nach Anspruch 9, **dadurch gekennzeichnet, dass** die zwei Stützelemente (10a, 10b) derart voneinander beabstandet an den gegenüberliegenden Stirnbereichen des Tragrahmens (2) angeordnet sind, dass zwischen den zwei Stützelementen (10a, 10b) ein in Längsrichtung (LR) des Transportwagen (1) verlaufender Einfahrkanal (EK2) für ein den Transportwagen (1) unterfahrendes und anhebendes Transportfahrzeug (60) ausgebildet ist.

11. Transportwagen nach einem der Ansprüche 1 bis 10, **dadurch gekennzeichnet, dass** der Tragrahmen (2) an der Oberseite mit Befestigungsschnittstellen (30) zur Befestigung von die Güter aufnehmenden Transportaufsätzen versehen ist.

12. Transportwagen nach Anspruch 11, **dadurch gekennzeichnet, dass** an jedem Eckbereich des Tragrahmens (2) jeweils eine Befestigungsschnittstelle (30) angeordnet ist.

13. System umfassend einen Routenzuganhänger (50) und mindestens einen Transportwagen (1) nach einem der vorangegangenen Ansprüche, wobei der Routenzuganhänger (50) höhenverstellbare Tragleisten (51, 52; 53, 54) aufweist, die mit der Unterseite des Tragrahmens (2) in Wirkverbindung bringbar sind und in die von der C-Form der Stützelemente (10a; 10b; 10c; 10d) gebildeten Freiräume (FR) hineinragen.

14. System nach Anspruch 13, **dadurch gekennzeichnet, dass** das System weiter ein Transportfahrzeug (60) umfasst, wobei das Transportfahrzeug (60) an der Oberseite eine Ladefläche zur Aufnahme des Tragrahmens (2) des Transportwagens (1) aufweist und das Transportfahrzeug (60) ausgebildet ist, dass das Transportfahrzeug (60) den Transportwagen (1) durch Einfahren in den zwischen den Stützelementen (10a; 10b; 10c; 10d) gebildeten Einfahrkanal (EK1; EK2) unterfahren kann.

15. System umfassend ein Transportfahrzeug (60) und mindestens einen Transportwagen (1) nach einem der Ansprüche 1 bis 12, wobei das Transportfahrzeug (60) an der Oberseite eine Ladefläche zur Aufnahme des Tragrahmens (2) des Transportwagens (1) aufweist und das Transportfahrzeug (60) ausgebildet ist, dass das Transportfahrzeug (60) den Transportwagen (1) durch Einfahren in den zwischen den Stützelementen (10a; 10b; 10c; 10d) gebildeten Einfahrkanal (EK1; EK2) unterfahren kann.

## Claims

1. Transport trolley (1) which is intended for transporting and storing goods and has a rectangular carrying frame (2), on the underside of which one supporting roller (7a-7d) is arranged at each of the four corner regions, said supporting rollers being used to support the transport trolley (1) on a roadway, wherein supporting elements (10a; 10b; 10c; 10d), which extend vertically downwards and to which the supporting rollers (7a; 7b; 7c; 7d) are fastened, are arranged on the carrying frame (2), wherein the supporting elements (10a; 10b; 10c; 10d) are arranged at the corner regions of the carrying frame (2) and the supporting elements (10a; 10b; 10c; 10d) each have at least one supporting carrier (11a, 11b; 11c), which runs vertically downwards and is arranged in the corner region of the carrying frame (2) so as to be spaced apart inwards from at least one outer edge (AK, LK, SK) of the carrying frame (2), **characterized in that** the supporting elements (10a; 10b; 10c; 10d) are C-shaped, with an upper carrying element (15) and a lower carrying element (16), wherein the carrying elements (15, 16) are connected by means of the at least one supporting carrier (11a; 11b; 11c), wherein the upper carrying element (15) is fastened to the carrying frame (2) and the supporting roller (7a; 7b; 7c; 7d) is fastened to the lower carrying element (16).

2. Transport trolley according to Claim 1, **characterized in that** the supporting carriers (11a, 11b; 11c) are each arranged at the corner region of the carrying frame (2) so as to be offset inwards from the end outer edge (SK) and the longitudinal outer edge (LK) of the carrying frame (2).

3. Transport trolley according to Claim 1 or 2, **characterized in that** the lower carrying element (16) has outer edges which are each arranged so as to be aligned with the end outer edge (SK) and the longitudinal outer edge (LK) of the corner region of the carrying frame (2).

4. Transport trolley according to one of Claims 1 to 3, **characterized in that** the supporting carriers (11a; 11b; 11c) are formed by vertically arranged tube profiles or vertically arranged carrying plates.

5. Transport trolley according to one of Claims 1 to 4, **characterized in that** the lower carrying elements (16) are formed by box-like carriers (20).

6. Transport trolley according to one of Claims 1 to 5, **characterized in that** the supporting elements (10a; 10b; 10c; 10d) are configured in such a manner that cavities (FR), into which height-adjustable carrying bars (51; 52; 53; 54) arranged on a tugger train trailer (50) for lifting the transport trolley (1) can project, are formed by the C shape of the supporting elements (10a; 10b; 10c; 10d).

7. Transport trolley according to one of Claims 1 to 6, **characterized in that** a respective supporting element (10a; 10b; 10c; 10d) is arranged at each corner region of the carrying frame (2), wherein each of the four supporting elements (10a; 10b; 10c; 10d) is provided with a respective supporting roller (7a; 7b; 7c; 7d).

8. Transport trolley according to Claim 7, **characterized in that** the four supporting elements (10a; 10b; 10c; 10d) are arranged at the corner regions of the carrying frame (2) so as to be spaced apart from one another in such a manner as to configure between the four supporting elements (10a; 10b; 10c; 10d) an entry channel (EK2), which runs in the longitudinal direction (LR) of the transport trolley (1), and an entry channel (EK1), which runs in the transverse direction (QR) of the transport trolley (1), for a transport vehicle (60) which travels beneath and lifts the transport trolley (1).

9. Transport trolley according to one of Claims 1 to 6, **characterized in that** a respective supporting element (10a, 10b) is arranged at opposite end regions of the carrying frame (2), wherein each of the two supporting elements (10a; 10b) is provided with two supporting rollers (7a, 7c; 7b, 7d).

10. Transport trolley according to Claim 9, **characterized in that** the two supporting elements (10a, 10b) are arranged at the opposite end regions of the carrying frame (2) so as to be spaced apart from one another in such a manner as to configure between the two supporting elements (10a, 10b) an entry channel (EK2), which runs in the longitudinal direction (LR) of the transport trolley (1), for a transport vehicle (60) which travels beneath and lifts the transport trolley (1).

11. Transport trolley according to one of Claims 1 to 10, **characterized in that** the upper side of the carrying frame (2) is provided with fastening interfaces (30) for fastening goods-receiving transport attachments.

12. Transport trolley according to Claim 11, **characterized in that** a respective fastening interface (30) is arranged at each corner region of the carrying frame (2).

13. System comprising a tugger train trailer (50) and at least one transport trolley (1) according to one of the preceding claims, wherein the tugger train trailer (50) has height-adjustable carrying bars (51, 52; 53, 54), which can be brought into operative connection with the underside of the carrying frame (2) and project into the cavities (FR) formed by the C shape of the supporting elements (10a; 10b; 10c; 10d).

14. System according to Claim 13, **characterized in that** the system further comprises a transport vehicle (60), wherein the upper side of the transport vehicle (60) has a loading surface for receiving the carrying frame (2) of the transport trolley (1) and the transport vehicle (60) is configured such that the transport vehicle (60) can travel beneath the transport trolley (1) by entering the entry channel (EK1; EK2) formed between the supporting elements (10a; 10b; 10c; 10d).

15. System comprising a transport vehicle (60) and at least one transport trolley (1) according to one of Claims 1 to 12, wherein the upper side of the transport vehicle (60) has a loading surface for receiving the carrying frame (2) of the transport trolley (1) and the transport vehicle (60) is configured such that the transport vehicle (60) can travel beneath the transport trolley (1) by entering the entry channel (EK1; EK2) formed between the supporting elements (10a; 10b; 10c; 10d).

## Revendications

1. Chariot de transport (1) pour le transport et le stockage de marchandises, qui présente un cadre porteur (2) de forme rectangulaire, sur le côté inférieur duquel est agencé, sur chacune des quatre zones de coin, un galet de d'appui (7a-7d) avec lequel le chariot de transport (1) s'appuie sur une voie de circulation, des éléments d'appui (10a ; 10b ; 10c ; 10d) s'étendant verticalement vers le bas étant agencés sur le cadre porteur (2), sur lesquels sont fixés les galets de d'appui (7a ; 7b ; 7c ; 7d), les éléments d'appui (10a ; 10b ; 10c ; 10d) étant agencés sur les zones de coin du cadre porteur (2) et les éléments d'appui (10a ; 10b ; 10c ; 10d) présentant chacun au moins un support d'appui (11a, 11b ; 11c) agencé dans la zone de coin du cadre porteur (2) à distance vers l'intérieur d'au moins un bord extérieur (AK, LK, SK) du cadre porteur (2) et s'étendant vers le bas verticalement, **caractérisé en ce que** les éléments d'appui (10a ; 10b ; 10c ; 10d) présentent une forme en C, qui présentent un élément porteur supérieur (15) et un élément porteur inférieur (16), les éléments porteurs (15, 16) étant reliés au moyen de l'au moins un support d'appui (11a ; 11b ; 11c), l'élément porteur supérieur (15) étant fixé au cadre porteur (2) et le galet d'appui (7a ; 7b ; 7c ; 7d) étant fixé à l'élément porteur inférieur (16).

2. Chariot de transport selon la revendication 1, **caractérisé en ce que** les supports d'appui (11a, 11b ; 11c) sont agencés sur la zone de coin du cadre porteur (2), respectivement décalés vers l'intérieur par rapport au bord extérieur frontal (SK) et au bord extérieur longitudinal (LK) du cadre porteur (2).

3. Chariot de transport selon la revendication 1 ou 2, **caractérisé en ce que** l'élément porteur inférieur (16) présente des bords extérieurs agencés de manière alignée avec le bord extérieur frontal (SK) et le bord extérieur longitudinal (LK) de la zone de coin du cadre porteur (2) .

4. Chariot de transport selon l'une quelconque des revendications 1 à 3, **caractérisé en ce que** les supports d'appui (11a ; 11b ; 11c) sont formés par des profilés tubulaires agencés verticalement ou par des plaques porteuses agencées verticalement.

5. Chariot de transport selon l'une quelconque des revendications 1 à 4, **caractérisé en ce que** les éléments porteurs inférieurs (16) sont formés par des supports en forme de caisson (20).

6. Chariot de transport selon l'une quelconque des revendications 1 à 5, **caractérisé en ce que** les éléments d'appui (10a ; 10b ; 10c ; 10d) sont configurés de telle sorte que la forme en C des éléments d'appui (10a ; 10b ; 10c ; 10d) forme des espaces libres (FR) dans lesquels peuvent pénétrer des barres porteuses (51 ; 52 ; 53 ; 54) réglables en hauteur, agencées sur une remorque de train routier (50), pour soulever le chariot de transport (1).

7. Chariot de transport selon l'une quelconque des revendications 1 à 6, **caractérisé en ce qu'**un élément d'appui (10a ; 10b ; 10c ; 10d) est agencé sur chaque zone de coin du cadre porteur (2), chacun des quatre éléments d'appui (10a ; 10b ; 10c ; 10d) étant pourvu d'un galet d'appui (7a ; 7b ; 7c ; 7d).

8. Chariot de transport selon la revendication 7, **caractérisé en ce que** les quatre éléments d'appui (10a ; 10b ; 10c ; 10d) sont agencés à une distance telle les uns des autres sur les zones de coin du cadre porteur (2) qu'entre les quatre éléments d'appui (10a ; 10b ; 10c ; 10d) un canal d'entrée (EK2) s'étendant dans la direction longitudinale (LR) du chariot de transport (1) et un canal d'entrée (EK1) s'étendant dans la direction transversale (QR) du chariot de transport (1) sont formés pour un véhicule de transport (60) passant sous le chariot de transport (1) et le soulevant.

9. Chariot de transport selon l'une quelconque des revendications 1 à 6, **caractérisé en ce qu'**un élément d'appui (10a, 10b) est agencé sur chacune des zones frontales opposées du cadre porteur (2), chacun des deux éléments d'appui (10a ; 10b) étant muni de deux galets d'appui (7a, 7c ; 7b, 7d).

10. Chariot de transport selon la revendication 9, **caractérisé en ce que** les deux éléments d'appui (10a, 10b) sont agencés à une distance telle l'un de l'autre sur les zones frontales opposées du cadre porteur (2) qu'un canal d'entrée (EK2) s'étendant dans la direction longitudinale (LR) du chariot de transport (1) est formé entre les deux éléments d'appui (10a, 10b) pour un véhicule de transport (60) passant sous le chariot de transport (1) et le soulevant.

11. Chariot de transport selon l'une quelconque des revendications 1 à 10, **caractérisé en ce que** le cadre porteur (2) est pourvu, sur le côté supérieur, d'interfaces de fixation (30) pour la fixation d'éléments hauts de transport recevant les marchandises.

12. Chariot de transport selon la revendication 11, **caractérisé en ce qu'**une interface de fixation (30) est agencée sur chaque zone de coin du cadre porteur (2).

13. Système comprenant une remorque de train routier (50) et au moins un chariot de transport (1) selon l'une quelconque des revendications précédentes, la remorque de train routier (50) présentant des barres porteuses (51, 52 ; 53, 54) réglables en hauteur, qui peuvent être amenées en liaison active avec le côté inférieur du cadre porteur (2) et qui pénètrent dans les espaces libres (FR) formés par la forme en C des éléments d'appui (10a ; 10b ; 10c ; 10d).

14. Système selon la revendication 13, **caractérisé en ce que** le système comprend en outre un véhicule de transport (60), le véhicule de transport (60) présentant sur le côté supérieur une surface de chargement pour recevoir le cadre porteur (2) du chariot de transport (1) et le véhicule de transport (60) étant configuré de telle sorte que le véhicule de transport (60) peut passer sous le chariot de transport (1) en entrant dans le canal d'entrée (EK1 ; EK2) formé entre les éléments d'appui (10a ; 10b ; 10c ; 10d).

15. Système comprenant un véhicule de transport (60) et au moins un chariot de transport (1) selon l'une quelconque des revendications 1 à 12, dans lequel le véhicule de transport (60) présente sur le côté supérieur une surface de chargement pour recevoir le cadre porteur (2) du chariot de transport (1) et le véhicule de transport (60) est configuré de telle sorte que le véhicule de transport (60) peut passer sous le chariot de transport (1) en entrant dans le canal d'entrée (EK1 ; EK2) formé entre les éléments d'appui (10a ; 10b ; 10c ; 10d) .
